# FASCICULE DE BREVET EUROPEEN

(11) **EP 2 785 223 B1**
(45) Date de publication et mention de la délivrance du brevet: **30.09.2015**
(21) Numéro de dépôt: 11801802.7
(22) Date de dépôt: 30.11.2011
(51) Int. Cl.: A47J 31/36, A47J 31/06

(54) **MACHINE DE PRÉPARATION DE BOISSONS PAR EXTRACTION DE CAPSULES**
MASCHINE ZUR ZUBEREITUNG VON GETRÄNKEN DURCH EXTRAKTION AUS KAPSELN
MACHINE FOR PREPARING BEVERAGES BY EXTRACTION FROM CAPSULES

(43) Date de publication de la demande: 08.10.2014
(73) Titulaire: Frydman, Philippe, 75006 Paris (FR); Frydman, Alain, 75008 Paris (FR); Baccouche, Mohamed, 76600 Le Havre (FR)
(72) Inventeur: FRYDMAN, Alain, 75008 Paris (FR); BACCOUCHE, Mohamed, 76600 Le Havre (FR)
(74) Mandataire: Blot, Philippe Robert Emile
(86) Numéro de dépôt international: PCT/FR2011/052833
(87) Numéro de publication internationale: WO 2013/079814

(56) Documents cités:
- EP-A1- 1 774 879
- EP-A1- 2 401 945
- WO-A1-97/43937
- US-A- 5 327 815

## Description

L'invention concerne en général les machines de préparation de boissons par extraction d'un produit stocké dans une capsule.

De telles machines comprennent typiquement des moyens pour la fourniture d'un fluide tel que de l'eau surchauffée ou de la vapeur d'eau sous pression, et un dispositif de réception de la capsule dans une position adéquate pour l'extraction du produit contenu dans la capsule par le fluide. Quand la capsule est en position d'extraction, le fluide fourni par la machine traverse le produit extractible stocké dans la capsule, et s'écoule hors de la machine.

De telles machines sont généralement conçues pour fonctionner avec un seul type de capsule.

Or, il existe actuellement sur le marché un grand nombre de types de capsules différentes les unes des autres. Elles présentent des géométries différentes les unes des autres. Elles ont également des zones d'entrée et de sortie de fluide prévues pour être ouvertes par différents mécanismes.

En effet, avant utilisation de la capsule, ces zones sont généralement fermées, de manière à préserver la qualité du produit stocké à l'intérieur de la capsule. La machine comporte des organes tels que des couteaux, adaptés pour percer les zones d'entrée et/ou de sortie d'un seul type de capsule, pour lequel la machine a été conçue.

Il y a donc à l'heure actuelle un besoin pour une machine susceptible d'accepter tous les types de capsules, indépendamment de leur géométrie et des moyens nécessaires pour l'ouverture de la zone d'entrée et/ou de la zone de sortie de la capsule.

L'invention concerne donc un ensemble de préparation de boisson selon le préambule de la revendication 1.

Un tel ensemble est connu de US 5 327 815, WO 97/43937 ou EP 1 774 879.

Il peut se produire des fuites sur de tels ensembles. Dans ce contexte, l'invention porte sur un ensemble dans lequel la gestion des fuites est améliorée.

A cette fin, l'invention porte sur un ensemble de production de boisson selon la revendication 1.

Ainsi, le fluide n'ayant pas traversé la capsule n'est pas dirigé vers le circuit d'évacuation du fluide ayant traversé la capsule. In ne se mélange pas à la boisson. Il sort par une sortie spécifique.

Ceci présente plusieurs avantages. D'abord, l'utilisateur peut détecter qu'une fuite se produit, et que les premier et/ou second dispositifs d'étanchéité sont déficients. Il voit qu'une partie du fluide passe par le circuit de collecte des fuites.

Par ailleurs, en cas de fuite, la qualité de la boisson n'est pas dégradée. En effet, le fluide ayant fui à travers les premier et/ou second dispositifs d'étanchéité ne se mélange pas avec la boisson et ne la dilue pas.

Le circuit de collecte dirige le fluide vers un bec verseur ou un bac situé à l'extérieur de la machine, ou vers un bac situé sous l'habillage de la machine ou vers tout autre endroit approprié.

Ainsi, l'ensemble de préparation de boissons comprend plusieurs adaptateurs interchangeables, chacun prévu pour recevoir au moins un type de capsules. La machine prévue pour la fourniture du fluide est quant à elle unique, et est adaptée pour recevoir tous les adaptateurs. L'utilisateur peut acheter tous les types de capsules disponibles, et choisit, en fonction du type de capsule qu'il a acheté, l'adaptateur correspondant.

Il n'y a donc pour lui aucun risque qu'il achète par mégarde des capsules d'un type non adapté à la machine qu'il possède.

Par ailleurs, quand un nouveau type de capsule est mis sur le marché, l'utilisateur doit seulement acheter un adaptateur pour pouvoir utiliser les capsules sur sa machine. Il n'a pas à changer la machine complète s'il souhaite utiliser de manière régulière ce type de capsule.

L'ensemble de préparation est donc particulièrement commode et économique pour l'utilisateur, puisqu'il permet d'utiliser tous les types de capsule disponibles sur le marché, sans avoir à changer la machine permettant de fournir le fluide.

Le produit extractible contenu dans les capsules est typiquement un café moulu. Toutefois, les capsules peuvent également contenir du thé, du chocolat, ou tout autre produit. Le café peut être du café pur, ou du café contenant un additif comme du lait, de la crème etc...

On entend ici par capsule un contenant, adapté pour recevoir et stocker le produit extractible. La capsule est typiquement jetable, c'est-à-dire n'est prévue que pour une seule extraction. En variante, la capsule est recyclable. Elle contient typiquement une quantité de produit extractible adaptée pour la préparation d'une tasse de boisson ou de deux tasses de boisson.

Comme indiqué plus haut, un type de capsule est essentiellement caractérisé par sa géométrie (forme, dimensions) et par le mode d'ouverture des zones d'entrée et de sortie de fluide. Deux types de capsules se différencient donc par la forme et/ou par les dimensions et/ou par le mode d'ouverture des zones d'entrée et de sortie. Plus concrètement, les capsules commercialisées sous des marques différentes correspondent chacune à un type différent.

La capsule, avant son chargement dans la machine, est étanche ou non étanche. Dans le premier cas, l'ensemble de préparation comporte des moyens pour ouvrir la capsule dans une zone d'entrée de fluide et dans une zone de sortie de fluide, de manière à permettre la circulation du fluide à travers le produit logé dans la capsule. Ceci n'est pas nécessaire quand la capsule n'est pas étanche, et comporte déjà des zones ouvertes prévues pour l'entrée et la sortie du fluide d'extraction. Les capsules non étanches sont typiquement vendues dans des sachets hermétiquement fermées, de manière à préserver la qualité du produit.

Les capsules peuvent être en tous matériaux, métalliques, plastiques, organiques, etc...

La machine est particulièrement adaptée aux capsules comportant une paroi périphérique rigide disposée autour d'un axe central, une paroi d'entrée fermant une première extrémité axiale de la paroi périphérique, et une paroi frontale fermant une seconde extrémité axiale de la paroi périphérique opposée à la première. La paroi périphérique est tronconique. Sa section s'accroit à partir de la paroi d'entrée jusqu'à la paroi de sortie. La paroi d'entrée, la paroi périphérique et la paroi frontale délimitent ensemble un logement de réception du produit extractible. La paroi périphérique forme une collerette sortante, entourant la paroi frontale. La paroi d'entrée est généralement bombée vers l'extérieur de la capsule. La paroi frontale est généralement plane.

Un grand nombre de capsules de ce type existe déjà. Elles sont vendues par exemple sous les marques Nespresso®, L'Or Espresso®, Tassimo®, Lavazza®, Lavazza Blue, Lavazza Espresso Point®, Illy®, Vergnano®, Capsul'in®, Denner®, Necap®, Dolce Gusto®, Casino® etc. Elles sont décrites par exemple par ces demandes de brevet EP 0512468, WO 02/26588, EP 2098144, WO 2007/137974, WO 2009/112291 ou WO 2010/034663.

Ces capsules diffèrent les unes des autres par leur taille, notamment le diamètre de la paroi d'entrée, le diamètre de la paroi frontale, l'angle de conicité de la paroi périphérique tronconique.

Elles diffèrent également par les moyens permettant d'ouvrir la paroi d'entrée. Certaines capsules sont prévues, pour avoir leur paroi d'entrée percée par des lames comme celles vendues sous la marque Nespresso®. De telles capsules sont décrites par exemple par WO 02/26588 ou EP 2 098144. D'autres sont prévues pour avoir leur paroi d'entrée ouverte sous l'effet de la pression du fluide d'extraction, comme la capsule décrite dans la demande PCT/FR 2011/051320 ou PCT/FR 2011/051321 ou PCT/FR 2011/051343 ou encore PCT/FR 2011/051348. De telles capsules comportent alors typiquement des lignes de faiblesse, permettant de faciliter l'ouverture de la zone d'entrée sous l'effet de la pression du fluide. Encore d'autres capsules comportent une paroi d'entrée pré-percée, avec une multitude de trous permettant de laisser passer le fluide d'extraction, comme celles vendues sous la marque L'Or Espresso®.

De même, ces capsules diffèrent par le mode d'ouverture de la zone de sortie. Certaines capsules sont prévues pour être percées par des picots ou des lames au niveau de la paroi frontale, comme celles vendues sous la marque Nespresso®. De telles capsules sont décrites par exemple par EP 2098144 ou WO 2009/112291. D'autres capsules sont prévues pour s'ouvrir sous l'effet de la pression du fluide, comme la capsule décrite dans la demande de brevet PCT/FR 2011/051320, ou PCT/FR 2011/051321 ou PCT/FR 2011/051343 ou encore PCT/FR 2011/051348. Les zones de sortie de ces capsules comportent typiquement des lignes de faiblesse pour faciliter l'ouverture. D'autres capsules comportent des parois frontales pré-percées, avec une multitude de trous pour laisser passer le fluide, comme celles vendues sous la marque L'Or Espresso®. Encore d'autres capsules comportent une membrane fermant la paroi frontale et intégrant des picots permettant de percer la membrane sous l'effet de la pression de fluide à l'intérieur de la capsule. De telles capsules sont décrites par WO 2009/115475 ou WO 2005/018395.

L'ensemble de préparation est également adapté pour pouvoir recevoir des capsules souples ayant une forme de lentille, connues sous le nom de dosettes. De telles capsules comportent typiquement deux parois bombées, en un matériau poreux, accolées l'une contre l'autre. Les parois bombées ont leur concavité tournée l'une vers l'autre. Elles sont soudées l'une à l'autre par leurs bords périphériques respectifs. Les bords périphériques sont typiquement en contact l'un contre l'autre dans un plan constituant le plan médian de la capsule. Les deux parties bombées délimitent entre elles un logement de réception du produit extractible. Une telle capsule est décrite par exemple CH 636311 ou EP 0272432 ou encore US 5012629. Elles sont commercialisées sous de multiples marques qui ne seront pas détaillées ici. Les dosettes souples peuvent également comporter deux parois bombées en des matériaux étanches, comme décrit dans EP 0870 547. Dans ce cas, la machine comporte des organes permettant de percer les parois pour créer une zone d'entrée de fluide et une zone de sortie de fluide.

Le fluide d'extraction est typiquement de la vapeur d'eau sous pression, ou de l'eau surchauffée. En variante, le fluide d'extraction est du lait, ou un mélange d'eau et de lait, ou tout autre fluide.

Comme indiqué ci-dessus, le réceptacle et le couvercle définissent entre eux la cavité de réception de la capsule. Dans un mode de réalisation, la cavité est délimitée sur la plus grande partie de sa périphérie par le réceptacle, le couvercle ne délimitant la cavité que sur une partie plus faible. Inversement, la cavité peut être délimitée sur la plus grande partie de sa périphérie par le couvercle, le reste étant délimité par le réceptacle. En variante, la cavité peut être délimitée sensiblement à moitié par le réceptacle, et sensiblement à moitié par le couvercle.

La cavité de réception présente typiquement sensiblement la même forme que la capsule. Ainsi, la forme externe de la capsule correspond à la forme interne de la cavité de réception. Plus précisément, un interstice de faible épaisseur sépare la surface externe de la capsule de la surface interne de la cavité de réception, cet interstice étant typiquement d'épaisseur inférieure à 1 mm.

Avantageusement, l'ensemble de fixation comprend une enveloppe délimitant intérieurement un logement adapté pour recevoir chacun desdits adaptateurs, et un dispositif de fixation adapté pour monter de manière réversible l'enveloppe sur la machine.

Ainsi, une même enveloppe, et un dispositif de fixation unique, sont utilisés pour monter tous les adaptateurs sur la machine. Ceci est particulièrement commode pour l'utilisateur.

Le dispositif de fixation de l'adaptateur sur la machine est de tout type adapté. Ce dispositif peut être du type à vis, ou à baïonnette.

En variante, l'adaptateur est prévu pour être déposé par l'utilisateur manuellement, dans un logement de la machine. Le chargement peut être effectué par le haut ou le bas. L'ensemble de fixation peut alors comporter un mécanisme permettant de verrouiller l'adaptateur en position et de créer une étanchéité pour la circulation du fluide.

De préférence, les adaptateurs présentent tous sensiblement la même forme externe, correspondant à la forme interne du logement.

Ainsi, le volume mort susceptible d'être rempli par le fluide entre l'adaptateur et le logement est particulièrement réduit. Ceci diminue les pertes de fluide et la consommation totale de fluide.

De préférence, chaque capsule présente une zone d'entrée de fluide, au moins certains adaptateurs ayant un organe de percement ou d'ouverture de la capsule dans ladite zone d'entrée, porté par le réceptacle et/ou le couvercle.

Ainsi, les organes servant au percement ou à l'ouverture de la capsule ne sont pas portés par la machine elle-même mais par l'adaptateur. Ceci est particulièrement avantageux car ces organes sont spécifiques à chaque type de capsules. Si ces organes étaient portés par la machine, il faudrait trouver un moyen permettant de les neutraliser pour certains types de capsules et de les rendre utilisables pour d'autres types de capsules. Ceci rendrait la conception des adaptateurs beaucoup plus complexe. Les organes de percement ou d'ouverture peuvent comprendre un rostre, des lames, des zones de contact entre la paroi interne de la cavité et des zones de la capsule, etc...

On entend ici par rostre un ergot central prévu pour percer un fond de la capsule en un point central (voir par exemple EP 2098144). Dans le cas où les organes de percement sont des lames, ces lames peuvent être agencées selon toutes sortes de dispositions (voir par exemple EP 2098144).

La paroi interne de la cavité peut également être agencée pour venir porter contre une partie du fond ou de la paroi périphérique de la capsule, qui fait saillie vers l'extérieur de la capsule respectivement par rapport au fond ou à la paroi périphérique. Quand l'adaptateur est fixé à la machine, le réceptacle et le couvercle sont sollicités l'un vers l'autre, et le volume interne de la cavité tend à se réduire. La paroi interne de la cavité vient alors porter contre la partie en saillie. Sous l'effet de cette pression, la zone d'entrée de la capsule se déchire. Dans ce cas, typiquement, la capsule comporte des zones d'affaiblissement à proximité de la partie en saillie, qui facilitent la rupture de la zone d'entrée de la capsule.

En variante, certains adaptateurs sont dépourvus d'organes de percement ou d'ouverture de la capsule dans la zone d'entrée. Dans ce cas, la capsule peut être prévue pour que la zone d'entrée soit rompue sous l'effet de la pression du fluide fourni par la machine et pénétrant dans la cavité, comme décrit dans PCT/FR 2011/051348 par exemple.

De manière similaire, chaque capsule présente une zone de sortie de fluide, au moins certains adaptateurs ayant un organe de percement ou d'ouverture de la capsule dans ladite zone de sortie, porté par le réceptacle et/ou le couvercle.

Ceci est également particulièrement avantageux du fait que les organes de percement ou d'ouverture varient d'une capsule à l'autre. Ainsi, l'ensemble de fixation ou la machine elle-même ne comportent pas de moyens tels que des lames ou des picots prévus pour l'ouverture de la zone de sortie des capsules. Ces moyens ne seraient en effet pas adaptés à tous les types de capsules et il serait nécessaire de les neutraliser dans certains cas. Il est donc plus simple que les moyens permettant l'ouverture d'une capsule de type donné soient prévus dans l'adaptateur correspondant. Ces moyens peuvent être des picots, des lames ou tout autre moyen pour percer ou déchirer ou ouvrir la zone de sortie de la capsule. Certaines capsules comportent un opercule étanche en matière plastique ou en métal fixé de manière à fermer la zone de sortie, comme décrit par exemple dans EP 0512668 ou EP 2098144. Dans ce cas, l'organe de percement comprend par exemple une pluralité de pointes ménagées sur le réceptacle. L'opercule peut comporter des lignes d'affaiblissement, en vue de faciliter l'ouverture par l'intermédiaire de l'organe de percement ou d'ouverture.

Dans certaines capsules, la zone de sortie est prévue pour s'ouvrir sous l'effet de la pression du fluide à l'intérieur de la capsule. Une telle capsule est décrite par exemple dans PCT/FR 2011/051348. Dans ce cas, l'adaptateur ne comporte pas d'organe prévu pour le percement ou l'ouverture de la capsule. En revanche, la zone de sortie est agencée à distance de la surface interne de la cavité, pour permettre la rupture de la zone de sortie de la capsule.

Typiquement, la machine comprend un conduit d'amenée de fluide, chaque couvercle ayant un canal raccordant fluidiquement le conduit à la cavité.

Le réceptacle, quant à lui, possède un orifice prévu pour l'évacuation du fluide ayant traversé la capsule. Cet orifice communique avec une sortie ménagée dans le dispositif de fixation et débouchant à l'extérieur de celui-ci. L'utilisateur, quand il souhaite préparer une boisson, dispose un verre ou une tasse sous cette sortie.

Typiquement, la machine comporte une surface d'appui contre laquelle le couvercle vient porter quand l'adaptateur est dans sa position d'extraction. Le conduit d'amenée de fluide débouche sur la surface d'appui. En position d'extraction, le canal du couvercle est placé par exemple en coïncidence avec l'extrémité du conduit d'amenée de fluide, ou est légèrement décalé par rapport à celui-ci.

Par ailleurs, le dispositif de fixation est typiquement adapté pour que, quand l'enveloppe est montée de manière réversible sur la machine, l'adaptateur soit serré entre l'enveloppe et la surface d'appui. Ceci permet de solliciter le réceptacle et le couvercle l'un vers l'autre, suivant une direction prédéterminée.

Quand le dispositif de fixation est du type à vis ou à baïonnette, ladite direction correspond à l'axe de pivotement de l'enveloppe.

Cette sollicitation du réceptacle et du couvercle l'un vers l'autre permet le percement ou l'ouverture de certaines capsules, notamment quand l'adaptateur comporte des organes de percement ou d'ouverture de la capsule.

L'ensemble comporte un premier dispositif d'étanchéité entre le couvercle de chaque adaptateur et la machine.

Ceci permet de limiter les fuites de fluide.

Le premier dispositif d'étanchéité comporte typiquement un joint, porté soit par le couvercle de l'adaptateur soit par la machine, notamment sa surface d'appui. Le joint entoure le conduit d'amenée de fluide.

Par ailleurs, chaque adaptateur comprend un second dispositif d'étanchéité entre la capsule et le couvercle. Ainsi, le fluide pénétrant dans la cavité de réception à travers le canal du couvercle est forcé de pénétrer dans la capsule par la zone d'entrée. Il ne peut pas d'échapper en s'écoulant d'abord entre la capsule et le couvercle, puis entre le couvercle et le réceptacle. Il ne peut pas non plus contourner la capsule pour s'écouler directement dans le canal de sortie de la boisson.

On limite ainsi la quantité de fluide consommée, et on augmente la qualité de la boisson.

Le second dispositif d'étanchéité comporte typiquement un joint interposé entre la capsule et le couvercle. Ce joint est interposé par exemple entre la collerette de la capsule et le couvercle ou entre la paroi latérale de la capsule et le couvercle. Le joint est porté soit par la capsule, soit par le couvercle lui-même. Le couvercle et/ou la capsule peuvent être réalisés dans des matériaux tels que la mise en appui de l'adaptateur contre la surface d'appui de la machine crée une étanchéité par contact direct entre la capsule et le couvercle. Il n'est alors pas nécessaire d'ajouter un joint spécifique, distinct du couvercle ou de la capsule.

De préférence, chaque adaptateur possède un troisième dispositif d'étanchéité, entre la capsule et le réceptacle. Typiquement, ce dispositif d'étanchéité correspond à un joint, entourant l'orifice d'évacuation du fluide ayant traversé la capsule. Ce troisième dispositif d'étanchéité permet d'éviter que le fluide fuit entre la capsule et le réceptacle. La quasi-totalité du fluide passe ainsi dans l'orifice prévu pour l'évacuation de la boisson. Le fluide qui franchirait le troisième dispositif d'étanchéité pourrait fuir entre le réceptacle et le couvercle.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique de l'ensemble de préparation de boissons de l'invention ;
- la figure 2 est une vue en coupe d'un adaptateur prévu pour recevoir un premier type de capsules, et de l'ensemble de fixation de la figure 1 .
- la figure 3 est une vue en perspective, éclatée, de l'adaptateur, de la capsule et de l'ensemble de fixation de la figure 2 ;
- la figure 4 est une vue similaire à celle de la figure 2, montrant un autre type de capsule chargé dans l'adaptateur ;
- la figure 5 est une vue similaire à celle de la figure 4, pour encore un autre type de capsule ;
- la figure 6 est une vue similaire à celle de la figure 2, pour un autre adaptateur et un autre type de capsule ; et
- les figures 7 à 10 sont des vues similaires à celle de la figure 2, pour d'autres adaptateurs correspondant à d'autres types de capsules.

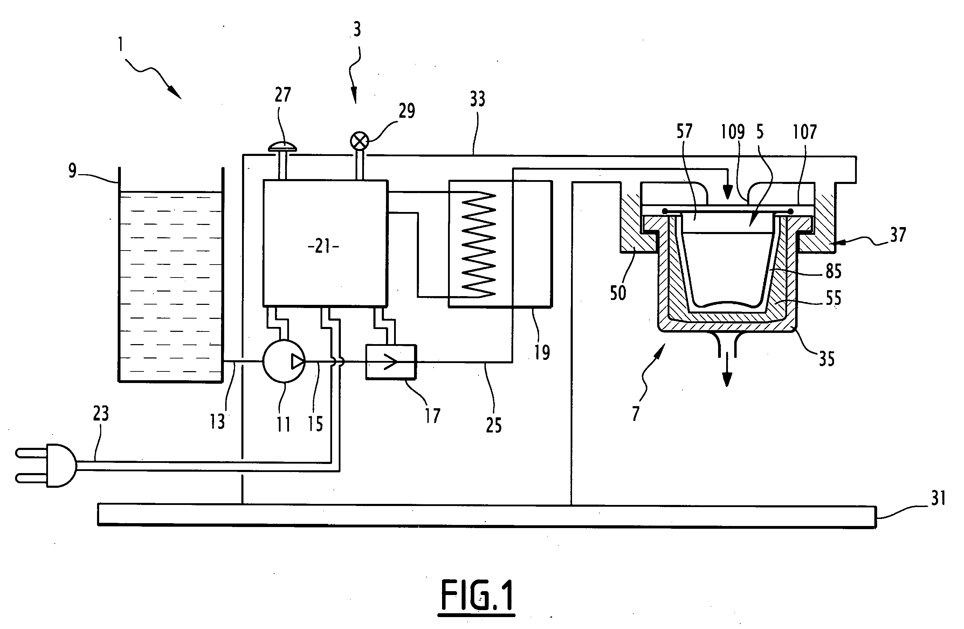

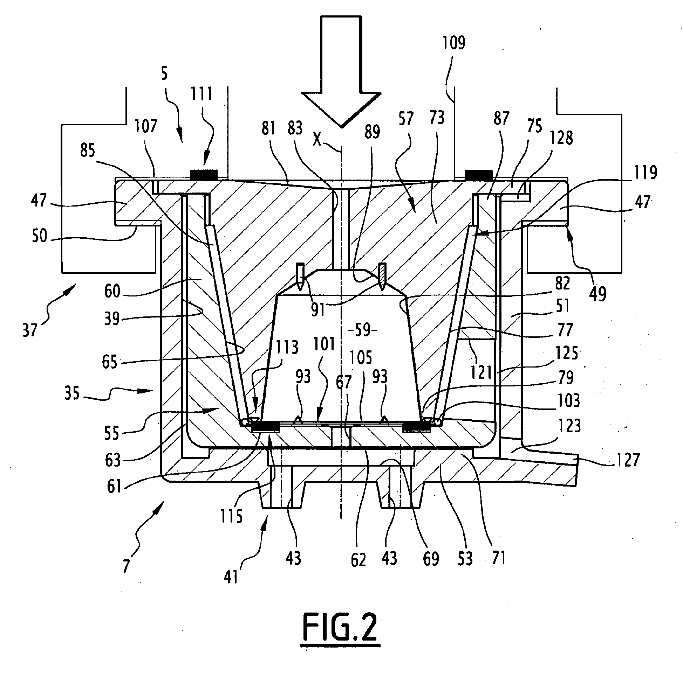

L'ensemble 1 représenté sur la figure 1 est destiné à la préparation de boissons par extraction, notamment de café. L'ensemble 1 comporte une machine 3 prévue pour la fourniture de vapeur d'eau, une pluralité d'adaptateurs 5, chacun prévu pour recevoir un type particulier de capsule, et un ensemble 7 de fixation adapté pour monter chaque adaptateur sur la machine de manière réversible. Seul un adaptateur est représenté, de manière schématique, sur la figure 1. D'autres adaptateurs sont représentés sur les figures 2 à 10.

Comme visible sur la figure 1, la machine 3 comporte :
- un réservoir 9, contenant de l'eau froide ;
- une pompe 11, ayant une aspiration 13 raccordée au réservoir d'eau 9, et un refoulement 15 ;
- un capteur 17 prévu pour mesurer le débit ou la pression d'eau au refoulement 15 de la pompe 11 ;
- un organe de chauffage 19 ;
- un dispositif de contrôle 21, prévu pour piloter les différents éléments de la machine ;
- un cordon 23 prévu pour raccorder la machine à une source d'énergie électrique, par exemple au secteur.

Le refoulement 15 de la pompe 11 est raccordé à un canal 25 d'amenée de fluide. Le capteur 17 mesure le débit et/ou la pression d'eau dans le canal 25 entre le refoulement de la pompe 11 et l'organe de chauffage 19. Il renseigne le dispositif de contrôle 21.

L'organe de chauffage 19 est de tout type adapté, et est par exemple un organe de chauffage électrique. Il est commandé par le dispositif de contrôle 21. Il réchauffe le fluide traversant le canal d'amenée 25.

Le dispositif de contrôle 21 pilote la pompe 11 et l'organe de chauffage 19. Le cordon 23 fournit l'énergie électrique nécessaire pour le fonctionnement de la machine. Le dispositif de contrôle 21 comporte un ou plusieurs boutons de commande 27 et un ou plusieurs témoins de fonctionnement lumineux 29.

La machine 3 comporte en outre une base 31 permettant de poser la machine de manière stable sur un plan horizontal, et un habillage 33 dans lequel sont logés la pompe 11, le capteur 17, l'organe de chauffage 19 et le dispositif de contrôle 21.

Comme visible sur les figures 1 et 2, l'ensemble 7 de fixation des adaptateurs à la machine comprend une enveloppe 35 et un dispositif de fixation 37 adapté pour monter de manière réversible l'enveloppe 35 sur la machine 3.

L'enveloppe 35 est commune à tous les adaptateurs 5 susceptibles d'être montés sur la machine. Elle délimite intérieurement un logement 39 adapté pour recevoir chacun desdits adaptateurs. L'enveloppe 35 comprend en partie inférieure un circuit 41 d'évacuation de la boisson préparée par extraction du produit contenu dans la capsule par l'intermédiaire du fluide. Le circuit 41 comporte par exemple un seul orifice de sortie, comme illustré sur la figure 1, mais peut également comporter deux orifices de sortie 43, comme illustré sur la figure 2 ou plus de deux orifices. Ces orifices de sortie 43 mettent en communication le logement 39 avec l'extérieur de l'enveloppe.

La machine, comme le montre la figure 1, est agencée pour que l'utilisateur puisse placer un récipient, par exemple une tasse, sur la base 31, sous les orifices 43, de manière à collecter gravitairement la boisson sortant par les orifices 43. On appelle ici boisson le fluide ayant traversé la capsule.

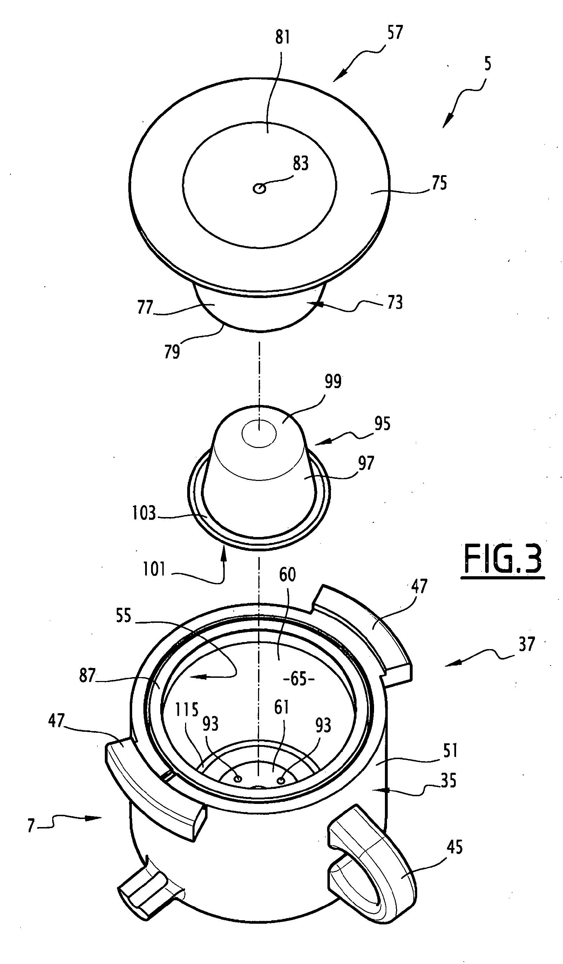

Comme visible sur la figure 3, l'enveloppe 35 comporte un organe de préhension 45, par l'intermédiaire duquel l'utilisateur peut faire pivoter l'enveloppe 35 par rapport à la machine. Dans l'exemple représenté sur les figures 1 à 3, le dispositif 37 permettant de monter l'enveloppe 35 sur la machine est du type à baïonnette. Ainsi, comme visible sur la figure 3, le dispositif 37 comporte deux secteurs 47 solidaires de l'enveloppe 35 et faisant saillie radialement vers l'extérieur de l'enveloppe 35. Le dispositif 37 comporte également une gorge 49, portée par la machine 3. La gorge 49 est ouverte radialement vers l'intérieur. Elle présente deux secteurs ouverts vers le bas, non représentés, interposés entre deux secteurs 50 fermés vers le bas (Figure 2). Les secteurs ouverts vers le bas présentent circonférentiellement une longueur adaptée pour permettre l'introduction des secteurs 47 dans la gorge 49. Par ailleurs, les secteurs 47 sont prévus pour coopérer avec les secteurs fermés vers le bas 50 de la gorge 49 en vue de bloquer l'enveloppe 35 par rapport à la machine.

L'enveloppe 35 est délimitée par une paroi cylindrique 51 d'axe X, cette paroi 51 étant ouverte à une extrémité axiale et fermée à son extrémité axiale opposée par un fond 53. Les orifices 43 sont ménagés à travers le fond 53. Les secteurs 47 sont placés au niveau de l'extrémité ouverte de la paroi cylindrique 51.

Le logement 39 est délimité par le fond 53 et la paroi 51. Il présente intérieurement une forme sensiblement cylindrique.

L'adaptateur 5 comporte un réceptacle 55 et un couvercle 57. Le réceptacle 55 et le couvercle 57 sont disposés dans le logement 39 de l'enveloppe. Ils délimitent ensemble une cavité 59 de forme adaptée pour recevoir une capsule de forme prédéterminée.

Dans l'exemple de réalisation des figures 1 à 3, le réceptacle 55 a une forme extérieure générale cylindrique. Quand il est disposé dans l'enveloppe 35, le réceptacle 55 est coaxial à cette enveloppe. Le réceptacle 55 est délimité par une paroi périphérique 60 et un fond 61 fermant une extrémité axiale de la paroi périphérique 60. Le fond 61 présente une face externe 62 sensiblement plane, reposant contre le fond 53 de l'enveloppe. La paroi périphérique 60 présente une surface externe 63 sensiblement cylindrique de diamètre externe correspondant sensiblement au diamètre interne de la paroi 51 de l'enveloppe. Le réceptacle 55 délimite intérieurement un espace 65 de forme sensiblement tronconique, de section allant en décroissant vers le fond 61. L'espace 65 est ouvert à l'opposé du fond 61. Un orifice 67 d'évacuation de boisson est prévu au centre du fond 61. Il met en communication l'espace 65 avec le logement 39.

Comme visible sur la figure 2, le fond 53 de l'enveloppe présente sous l'orifice 67 une zone en creux 69. Cette zone en creux est entourée par une nervure 71 faisant saillie vers l'intérieur de l'enveloppe 35. La face externe 62 du fond 61 du réceptacle est en appui contre la nervure 71. En revanche, la zone en creux 69 est écartée de la face externe 62 du fond 61. Les orifices de sortie 43 débouchent dans la zone en creux 69.

Le couvercle 57, comme visible sur les figures 2 et 3, comporte un tronc central 73 et une collerette périphérique 75. Le tronc central 73 est délimité extérieurement par une surface périphérique tronconique 77, une petite base 79 et une grande base 81. La surface tronconique 77 converge de la grande base 81 à la petite base 79. Le tronc 73 est symétrique de révolution. Quand le couvercle est engagé à l'intérieur du réceptacle, et que l'adaptateur est en place dans l'enveloppe, le couvercle est coaxial à l'axe X. La petite base 77 est alors en appui contre le fond 61 du réceptacle, la grande base 81 se situant sensiblement au niveau de l'extrémité ouverte du réceptacle. Comme visible sur la figure 2, la collerette 75 fait saillie radialement autour de la grande base 81, et se situe dans le prolongement de celle-ci.

La cavité 59 prévue pour la réception de la capsule est creusée essentiellement dans le tronc 73 du couvercle. Elle présente une ouverture au niveau de la petite base 77. Elle est délimitée par des surfaces du couvercle, à savoir un fond borgne 89 tourné vers la grande base 81 et une surface interne tronconique 82, convergeant de l'ouverture vers le fond borgne 89.

Quand l'adaptateur est en position d'extraction, l'ouverture est fermée par le fond 61 de l'adaptateur.

Le couvercle 57 présente un canal 83 pour le passage du fluide, débouchant d'un côté dans le fond borgne 89 de la cavité 59, et de l'autre côté au centre de la grande base 81.

Quand le couvercle est engagé dans le réceptacle, la surface externe 77 du tronc 73 s'étend parallèlement et en vis-à-vis de la surface interne de l'espace 65, un léger interstice 85 séparant les deux surfaces l'une de l'autre. En revanche, la collerette 75 repose directement contre le bord périphérique 87 délimitant l'extrémité axiale ouverte de l'espace 65.

Comme visible sur la figure 2, le fond borgne 89 de la cavité comporte des couteaux 91. Les lames des couteaux 91 font saillie vers l'intérieur de la cavité 59.

Par ailleurs, le fond 61 du réceptacle porte des pointes 93 faisant saillie vers l'intérieur du réceptacle. Quand le couvercle 57 est en place dans le réceptacle 55, les pointes 93 font saillie à l'intérieur de la cavité 59.

Une capsule 95 destinée à être logée dans la cavité 59 est visible sur les figures 2 et 3. Cette capsule est par exemple du type vendu sous la marque Nespresso® ou sous la marque Casino®. Elle est par exemple du type décrit dans EP 2098144. Elle présente une forme externe sensiblement conjuguée de la forme interne de la cavité de réception 59. Plus précisément, elle présente une paroi périphérique tubulaire 97 présentant un axe central, un fond 99 fermant une première extrémité axiale de la paroi tubulaire 97, et une paroi frontale 101 fermant une seconde extrémité axiale de la paroi tubulaire 97, opposée à la première. La paroi tubulaire 97 est sensiblement de forme tronconique, et va en s'élargissant à partir du fond 99 jusqu'à la face de sortie 101. Le fond 99 est venu de matière avec la paroi tubulaire 97. Il est bombé vers l'extérieur de la capsule. La capsule présente par ailleurs une collerette 103, s'étendant dans le plan de la paroi frontale 101 de la capsule. La collerette 103 est solidaire de la paroi 97. La paroi 97 est ouverte à l'opposé du fond 99. En revanche, un opercule 105 est fixé à la collerette 103, et ferme la capsule au niveau de la paroi frontale. L'opercule 105, la paroi 97 et le fond 99 délimitent intérieurement un volume de réception du produit extractible.

Le fond 99 définit une zone d'entrée du fluide à l'intérieur de la capsule. La paroi frontale 101 définit une zone de sortie pour la boisson. Avant chargement de la capsule dans la cavité de réception 59, les zones d'entrée et de sortie sont étanches. Ainsi, la qualité du produit extractible stocké dans la capsule est préservée.

Une fois la capsule chargée dans la cavité de réception, la zone d'entrée est percée par les couteaux 91, et la zone de sortie par les pointes 93. On crée ainsi un chemin de passage pour le fluide à travers la capsule.

La situation de la capsule une fois chargée dans la cavité de réception est illustrée sur la figure 2. Le fond 99 de la capsule est appliqué contre le fond borgne 82 de la cavité de réception. La paroi tubulaire 97 est appliquée contre la surface interne 82 de la cavité de réception. L'opercule 105 est appliqué contre le fond 61 du réceptacle. La collerette 103 est prise entre le bord libre du couvercle délimitant l'ouverture de la cavité de réception 59, et le fond 61 du réceptacle.

Comme indiqué plus haut, l'ensemble de fixation 7 est adapté pour monter l'adaptateur sur la machine dans une position d'extraction, illustrée sur la figure 2, dans laquelle la cavité de réception 59 est susceptible d'être alimentée par le fluide.

Comme visible sur les figures 1 et 2, la machine présente une surface d'appui 107 contre laquelle l'adaptateur vient porter en position d'extraction. La surface d'appui 107 est tournée vers le bas, c'est-à-dire vers la base de la machine. Le conduit d'amenée de fluide 25 débouche par une extrémité 109 sensiblement au centre de la surface d'appui 107. La gorge 49 du dispositif de fixation 37 s'étend autour de la face d'appui 107. Quand l'enveloppe 35 est montée sur la machine par l'intermédiaire du dispositif de fixation 37, la grande base 81 et la collerette 75 du couvercle viennent porter contre la surface d'appui 107. Le canal 83 est alors placé sensiblement dans le prolongement du conduit d'amenée 25, et communique fluidiquement avec celui-ci.

L'ensemble de préparation de boissons comporte un premier dispositif d'étanchéité 111, entre le couvercle 73 et la machine 3. Ce premier dispositif 111 comprend typiquement un joint porté par la surface d'appui 107, et entourant l'extrémité 109 du conduit d'amenée de fluide. Le joint est écrasé entre la grande base 81 et la surface d'appui 107 quand l'adaptateur est monté sur la machine.

L'ensemble comporte un second dispositif d'étanchéité 113, entre la capsule et le couvercle. Le dispositif 113 comprend un joint porté par la petite base 79 et s'étend autour de l'ouverture de la cavité. Ce joint fait saillie par rapport à la petite base du couvercle, et est appliqué contre la collerette 103 de la capsule. Dans la position d'extraction de l'adaptateur, ce joint est écrasé entre la collerette et le couvercle.

L'ensemble comporte encore un troisième dispositif d'étanchéité 115 entre la capsule et le réceptacle. Le dispositif 115 comporte un autre joint, placé sur le fond 61 du réceptacle. Le joint entoure l'orifice d'évacuation 67. Quand la capsule est en place dans la cavité de réception, le joint est écrasé entre la paroi frontale 101 de la capsule et le fond 61 du réceptacle. Plus précisément, le joint est écrasé entre la collerette de la capsule et le fond 61.

L'ensemble de l'invention comporte encore un circuit 119 de collecte des fuites à travers les premier et second dispositifs d'étanchéité. Ce circuit est complètement séparé du circuit d'évacuation du fluide ayant traversé la capsule, de manière à ce que lesdites fuites ne viennent pas diluer la boisson.

Comme visible sur la figure 2, le circuit 119 comporte, outre l'interstice 85 entre le couvercle et le réceptacle, au moins une ouverture 121 ménagée à travers la paroi latérale 59 du réceptacle, et un passage 123 à travers l'enveloppe 35. L'ouverture 121 raccorde l'interstice 85 à un interstice 125 existant entre le réceptacle et l'enveloppe. Le passage 123 fait communiquer l'interstice 125 avec l'extérieur. Il est ménagé dans la zone de jonction entre la paroi cylindrique 51 de l'enveloppe et le fond 53 de l'enveloppe. Il débouche dans un bec verseur 127, par l'intermédiaire duquel les fuites de fluide tombent sur la base de la machine.

Le fonctionnement de la machine équipée de l'adaptateur décrit ci-dessus va maintenant être détaillé.

Quant un utilisateur veut préparer une boisson, il commande d'abord la mise en chauffe de la machine par l'intermédiaire d'un des organes de commande 27. Puis, il place le réceptacle 55 dans l'enveloppe 35, et la capsule 95 dans le couvercle 57. Il introduit ensuite le tronc 73 du couvercle dans l'espace interne 65 du réceptacle, de manière que la collerette 75 vienne porter contre le bord 87 supérieur du réceptacle.

L'utilisateur monte ensuite l'adaptateur sur la machine dans sa position d'extraction. Pour cela, il engage les secteurs 47 dans les zones ouvertes vers le bas de la gorge 49, suivant un mouvement vertical ascendant. Il fait ensuite pivoter l'enveloppe 35 autour son axe X, pour placer les secteurs 47 dans des zones fermées vers le bas de la gorge 49. Il est à noter que la gorge 49 et/ou les secteurs 47 présentent des rampes circonférentielles, pour que le mouvement circulaire de l'enveloppe autour de l'axe X provoque un déplacement axial de ladite enveloppe et de l'adaptateur selon l'axe X vers la surface d'appui 107 de la machine.

La grande base 81 du couvercle vient alors porter contre la surface d'appui 107 de la machine, en écrasant le joint du premier dispositif d'étanchéité 111. Par ailleurs, l'enveloppe 35 et la surface d'appui 107 sollicitent alors axialement le réceptacle et le couvercle l'un vers l'autre. Sous l'effet de cette sollicitation, les couteaux 91 percent le fond 99 de la capsule, et les pointes 93 percent l'opercule 105 de la capsule. Par ailleurs, cette sollicitation conduit à l'écrasement du joint du second dispositif d'étanchéité 113 entre la collerette 103 de la capsule et le couvercle, et à l'écrasement du joint du troisième dispositif d'étanchéité 115 entre la collerette de la capsule et le fond du réceptacle.

Une fois la capsule chargée sur la machine, l'utilisateur place un récipient, par exemple une tasse, sur la base 31 de la machine, sous les orifices de sortie 43.

L'utilisateur déclenche alors la pompe 11 par l'intermédiaire d'un autre organe de commande 27 de la machine. La pompe 11 aspire le fluide dans le réservoir 9 et le refoule dans le conduit d'amenée 25. Le fluide traverse l'organe de chauffage 19, où il est porté à haute température. Il atteint l'extrémité 109 et traverse le couvercle 57 par l'intermédiaire du canal 83, jusque dans la cavité de réception 59. Il pénètre dans la capsule 95 par la zone d'entrée percée dans le fond de cette capsule, traverse le produit extractible en extrayant l'arôme de ce produit, et sort de la capsule par la zone de sortie de la paroi frontale 101. Le fluide traverse le réceptacle par l'orifice d'évacuation 67, et débouche dans la zone en creux 69. De là il s'écoule dans le récipient par les orifices de sortie 43. Il ne peut pas se diriger vers l'interstice 125 entre le réceptacle et l'enveloppe, du fait de la présence de la nervure 71 qui isole la zone en creux 69 de l'interstice 125.

Le fluide qui pourrait s'infiltrer à travers le premier dispositif d'étanchéité 111, par exemple du fait du vieillissement du joint, contourne la collerette 75 et s'écoule par un passage 128 prévu dans ce but entre la collerette 75 du couvercle et l'enveloppe, jusqu'à l'interstice 125. Il s'écoule ensuite à travers le passage 123 jusque dans le bec 127 et tombe à l'extérieur de la machine. De même, le fluide qui contournerait la capsule et s'infiltrerait à travers le deuxième dispositif d'étanchéité 113 s'écoule dans l'interstice 85. Il s'infiltre de là jusqu'à l'interstice 125, à travers l'ouverture 121. Il s'écoule à l'extérieur de l'enveloppe 35 à travers le passage 123 et le bec 127.

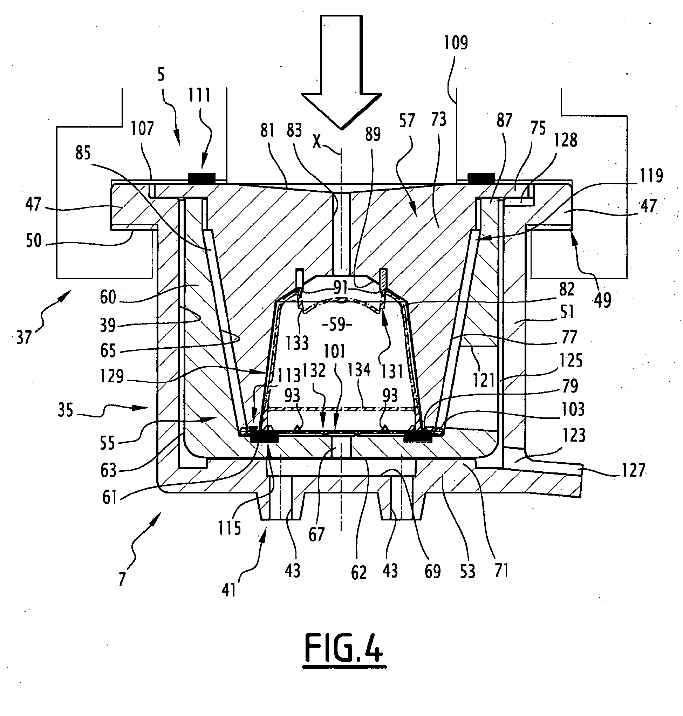

La figure 4 illustre l'adaptateur des figures 1 à 3, chargé avec une capsule 129 telle que décrite dans la-demande de brevet PCT/FR2011/051348. Cette capsule 129 a une forme générale similaire à celle de la capsule représentée sur les figures 2 et 3. Elle diffère de la capsule des figures 2 et 3 essentiellement par sa zone d'entrée 131 et par sa zone de sortie 132.

Par ailleurs, la capsule 129 comporte un filtre de sortie 134, logé à l'intérieur de la paroi tubulaire 97. Le filtre 134 est fixé à la paroi tubulaire 97 par encliquetage. Il est légèrement en retrait par rapport à la paroi frontale 101 de la capsule. Ainsi, quand la capsule est en place dans la cavité de réception, les pointes 93 n'entrent pas en contact avec le filtre 134.

Avant chargement dans la cavité de réception 59, la paroi frontale 101 de la capsule 129 est fermée par un opercule en matière plastique fixé à la collerette. Cet opercule est retiré par l'utilisateur juste au moment du chargement, ce qui crée une zone de sortie pour le fluide.

Avant chargement dans la cavité, la zone d'entrée 131 est étanche. Dans la capsule de la figure 4, la zone d'entrée 131 s'ouvre sous l'effet de la pression du fluide fourni par la machine. Ce fluide pénètre dans la cavité de réception 59 via le canal 83. La zone d'entrée 131 est en retrait vers l'intérieur de la capsule par rapport au fond borgne 89 de la cavité de réception. Ainsi, un espace libre est ménagé entre la zone d'entrée 131 de la capsule et le fond borgne 89, dans lequel viennent se loger les couteaux 91. Ces couteaux ne touchent pas la capsule 129 quand celle-ci est chargée dans la cavité de réception 59. La capsule 129 présente des lignes de moindre résistance 133, ménagées dans la zone d'entrée 131. Sous l'effet de la pression du fluide, la zone d'entrée de la capsule se rompt le long des lignes de moindre résistance 133, de manière à créer une ouverture pour le passage du fluide.

Dans une variante de réalisation non représentée, l'adaptateur prévu pour recevoir la capsule 129 est légèrement différent de celui représenté sur les figures 1 à 4. Plus précisément, il est identique en tous points à l'adaptateur représenté sur les figures 1 à 4, à l'exception du fait qu'il ne comporte pas les couteaux 91 prévus pour percer la zone d'entrée de la capsule, et/ou qu'il ne comporte pas les pointes 93.

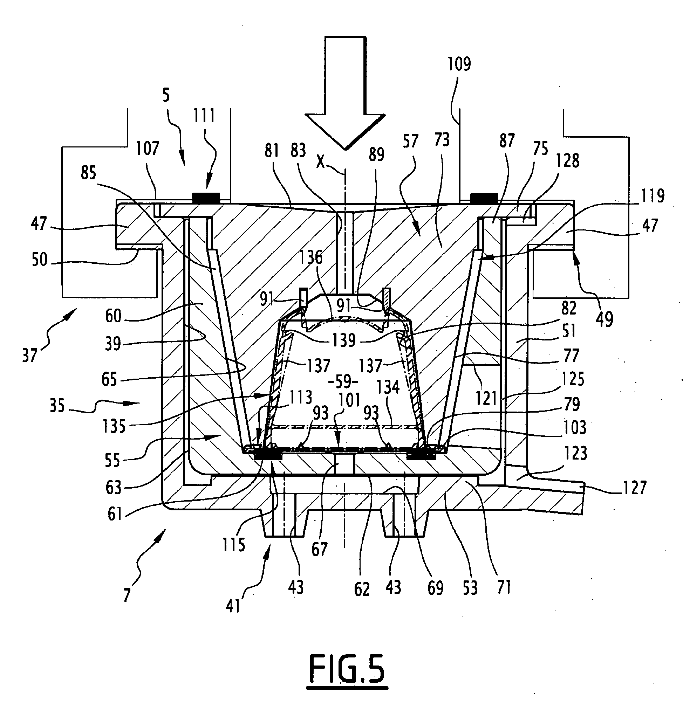

La figure 5 illustre l'adaptateur représenté sur les figures 1 à 3, chargé avec une capsule 135 d'un type encore différent. Cette capsule 135 fait l'objet d'une demande de brevet internationale, déposée le même jour que la présente demande de brevet.

Comme la capsule 129, la capsule 135 comporte une zone 136 en retrait vers l'intérieur de la capsule par rapport au fond borgne 89 de la cavité de réception et un filtre 134 en retrait par rapport à la face de sortie. Ainsi, les couteaux 91 ne percent pas le fond 99 de la capsule 135 quand celle-ci est chargée à l'intérieur de la cavité de réception 59. En revanche, la capsule 135 ne comporte pas au niveau du fond 99 de lignes de moindre résistance, en vue de provoquer la rupture du fond 99 sous l'effet de la pression du fluide.

En revanche, la capsule 135 comporte deux oreilles latérales 137, en saillie par rapport à la paroi tubulaire tronconique 97. Les oreilles 137 sont raccordées à la paroi tronconique 97 par des lignes de moindre résistance 139.

Comme indiqué plus haut, la cavité de réception 59 présente une forme interne correspondant à la forme externe de la capsule 95 représentée sur les figures 2 et 3. Ainsi, il n'est pas possible de loger les oreilles 137 dans la cavité 59, sans que ces oreilles 137 n'interfèrent avec la surface interne 82 de la cavité.

L'utilisateur charge donc d'abord la capsule 135 dans la cavité 59 ménagée dans le couvercle. Il ne peut pas enfoncer la capsule 135 au fond de la cavité 59, du fait de la présence des oreilles 137. Puis, il place le couvercle dans le réceptacle 55 et monte l'adaptateur sur la machine 3 à l'aide du dispositif de fixation 37. Comme indiqué précédemment, au moment du montage, le couvercle 57 et le réceptacle 55 sont sollicités axialement l'un vers l'autre. Ainsi, la surface interne 82 de la cavité 59 vient porter contre les oreilles 137 et sollicite ces oreilles 137 vers l'intérieur de la capsule 135. Ceci provoque la rupture des lignes de moindre résistance 139, et la création d'une zone d'entrée dans la capsule. Sur la figure 5, les oreilles 137 sont représentées après rupture des lignes de moindre résistance 139, et sont escamotées à l'intérieur de la capsule. Des zones ouvertes s'étendant dans la paroi 97, autour des oreilles 137 sont représentées sur la figure 5. Ces zones permettent l'entrée du fluide dans la capsule.

Comme précédemment, en variante, l'adaptateur prévu pour recevoir cette capsule pourrait être en tous points identique à l'adaptateur représenté sur les figures 1 à 3, à l'exception du fait qu'il ne comporterait pas les couteaux 91 et/ou les pointes 93.

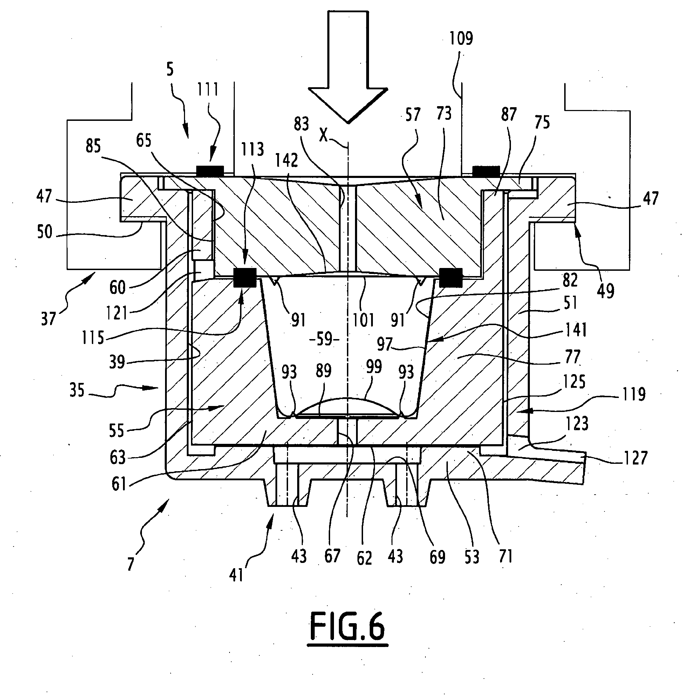

La figure 6 illustre un autre adaptateur, adapté pour une capsule d'un type différent de celle décrite sur les figures précédentes. La capsule est par exemple du type vendu sous la marque Lavazza Blue®, Vergnano®, L'Or Espresso®, ou encore Denner®. Seuls les points par lesquels l'adaptateur et la capsule diffèrent de l'adaptateur et de la capsule des figures 1 à 3 seront détaillés ci-dessous. Les éléments identiques ou assurant la même fonction seront désignés par les mêmes références sur les figures 1 à 3 et sur la figure 6.

La capsule 141 présente la même forme générale que la capsule 95, avec une paroi tubulaire tronconique 97, un fond 99 et une paroi frontale 101. La paroi tubulaire 97 converge vers le fond 99. Toutefois, la zone d'entrée de fluide de la capsule se situe dans la paroi frontale 101, et la zone de sortie de fluide se situe au niveau du fond 99.

De manière à permettre le chargement de la capsule, la cavité de réception 59 est ménagée essentiellement dans le réceptacle 55. Comme visible sur la figure 6, le réceptacle présente en conséquence un fond 61 de forte épaisseur, dans lequel est ménagée la cavité 59 de réception de la capsule. Le fond borgne 89 de la cavité 59 est tourné vers le fond 53 de l'enveloppe. Par ailleurs, la cavité débouche par une ouverture dans l'espace interne 65 du réceptacle, destiné à recevoir le tronc 73 du couvercle. L'orifice 67 d'évacuation de la boisson débouche au centre du fond borgne 89. Ce fond borgne 89 porte également les pointes 93 destinées à ouvrir la zone de sortie de la capsule. La section de la cavité de réception 59 se réduit à partir de son ouverture vers le fond borgne 89.

Le tronc 73 du couvercle est beaucoup plus court que sur les figures 1 à 3. Il ne comporte pas de cavité creusée dans sa face tournée vers le réceptacle. Le tronc 73 présente une forme générale cylindrique, et non tronconique.

La face 142 du tronc 73 tournée vers le réceptacle porte les couteaux 91 destinés à ouvrir la zone d'entrée de la capsule. Quand le couvercle 57 est engagé dans le réceptacle 55, la face 142 ferme l'ouverture de la cavité 59.

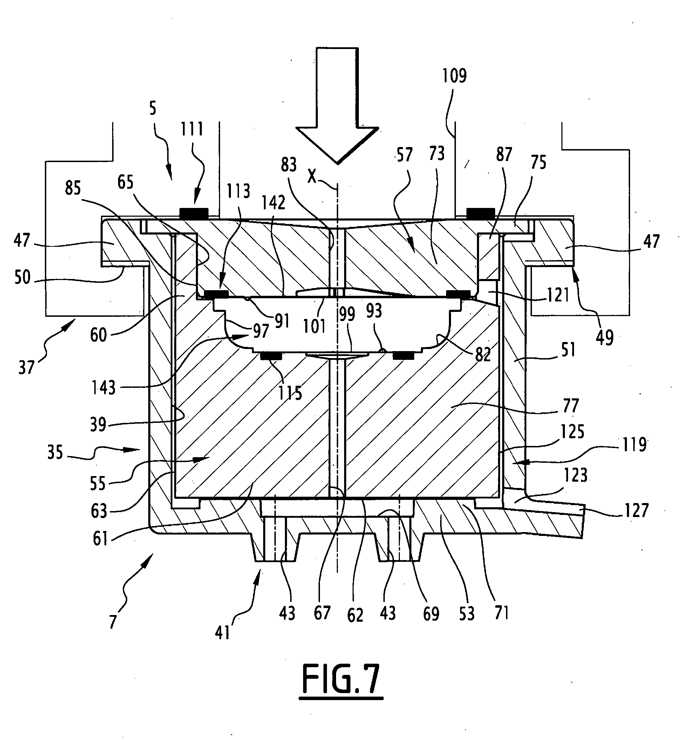

La figure 7 illustre un autre type d'adaptateur, adapté pour l'utilisation d'un autre type de capsule. La capsule est par exemple du type vendu sous la marque Carte Noire L'Espresso® ou Carte Noire Trio® ou encore Tassimo®. Seules les différences entre l'adaptateur et la capsule de la figure 7 et ceux de la figure 6 seront détaillées ci-dessous. Les éléments identiques ou assurant la même fonction sur la figure 6 et sur la figure 7 seront désignés par les mêmes références.

La capsule 143 de la figure 7 présente, perpendiculairement à l'axe X, une section plus grande que la capsule 141 de la figure 6. En revanche, parallèlement à l'axe X, la capsule 143 de la figure 7 présente une hauteur plus faible que celle de la figure 6. La cavité 59, ménagée dans le réceptacle, est donc de plus grande section mais de plus faible profondeur que la cavité 59 illustrée sur la figure 6.

Par ailleurs, le troisième dispositif d'étanchéité 115 est placé sur le fond borgne 89 de la cavité de réception. Il entoure l'orifice 67. Il est donc interposé entre le fond borgne 89 de la cavité et le fond 99 de la capsule.

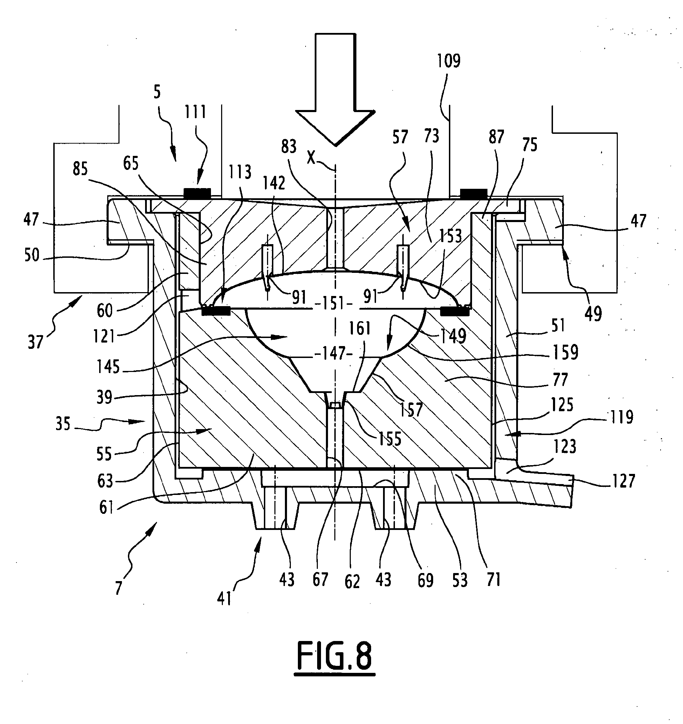

La figure 8 illustre encore un autre adaptateur destiné à recevoir un autre type de capsule. Seules les différences entre la capsule 119 et l'adaptateur de la figure 8 et ceux de la figure 6 seront détaillées ci-dessous. Les éléments identiques ou assurant la même fonction sur la figure 8 et sur la figure 6 seront désignés par les mêmes références.

Dans l'adaptateur de la figure 8, la cavité 59 est creusée partiellement dans le réceptacle 55 et partiellement dans le couvercle 57.

Ainsi, le fond 61 du réceptacle présente une forte épaisseur, et présente une première partie de cavité 147. Cette première partie de cavité 147 est délimitée par un fond borgne 149 vers le fond 53 de l'enveloppe, et est ouverte vers le couvercle 57.

Le tronc 73 du couvercle présente généralement la même forme que celui de la figure 6. Toutefois, sa face 142 est creusée de manière à former une seconde partie de cavité 151. Cette seconde partie de cavité 151 est fermée par un fond bombé 153 vers la face d'appui 107 de la machine, et est ouverte vers le fond du réceptacle. Les première et seconde parties de cavité 147 et 151 forment ensemble la cavité 59 de réception de la capsule. Les couteaux 91 sont portés par le fond bombé 153 de la seconde partie de cavité 151. Le fond borgne 149 de la première partie de cavité comporte des pointes (non représentées) destinées à l'ouverture de la zone de sortie de la capsule. La seconde partie de cavité 151 présente une forme de coupelle, avec une ouverture de grande taille tournée vers le réceptacle et vers la première partie de cavité 147.

La première partie de cavité 147 présente, comme visible sur la figure 8, trois tronçons successifs 155, 157 et 159. Le premier tronçon 155, le plus éloigné du couvercle, présente une forme générale tronconique, coaxiale à l'axe X. Sa section droite correspond sensiblement à la section droite de l'orifice d'évacuation du fluide 67. Ce premier tronçon est prolongé par un second tronçon 157, lui aussi tronconique, de plus forte section que le tronçon 155. Un épaulement 161 sortant raccorde les tronçons 155 et 157. Le tronçon 157 va en s'élargissant vers le couvercle. Le tronçon 159 prolonge le tronçon 157 vers le couvercle. Le tronçon 159 présente une forme de coupelle, de section allant en s'accroissant vers le couvercle. L'ouverture par laquelle la première partie de cavité 147 débouche dans la seconde partie de cavité 151 est de plus faible section que l'ouverture de la seconde partie de cavité 151.

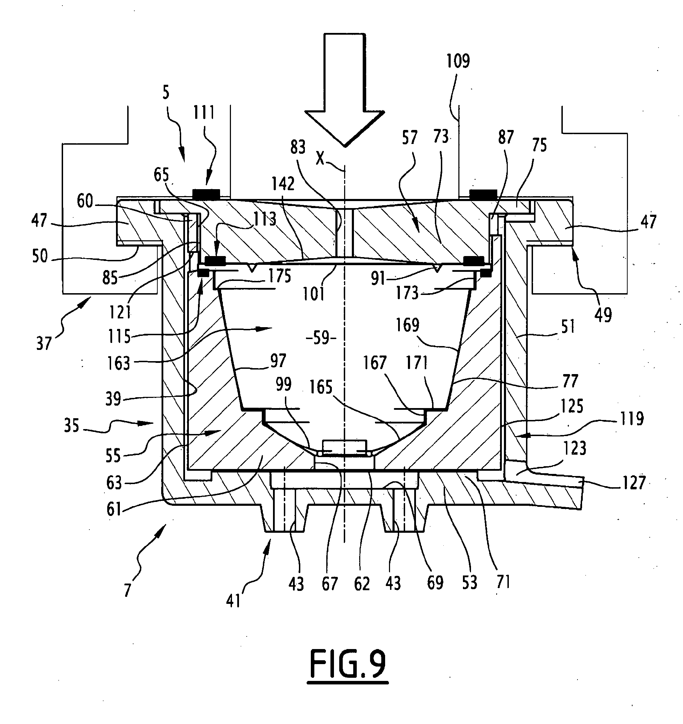

Encore un autre exemple d'adaptateur, prévu pour recevoir encore un autre type de capsule 163, va maintenant être décrit, en référence à la figure 9. La capsule est par exemple du type vendu sous la marque Dolce Gusto®. Seuls les points par lesquels l'adaptateur et la capsule 163 diffèrent de l'adaptateur et de la capsule de la figure 6 seront détaillés ci-dessous. Les éléments identiques ou assurant la même fonction sur la figure 9 et sur la figure 6 seront désignés par les mêmes références.

L'adaptateur de la figure 9 diffère essentiellement de celui de la figure 6 par la forme de la cavité de réception 59. Celle-ci présente, en partant du fond borgne, un premier tronçon 165 sensiblement tronconique, prolongé par un premier tronçon cylindrique 167, les deux tronçons étant coaxiaux à l'axe X. Le premier tronçon tronconique 165 s'élargit vers le premier tronçon cylindrique 167. Le premier tronçon cylindrique 167 est prolongé par un second tronçon tronconique 169, qui va en s'élargissant vers le couvercle. Les tronçons 167 et 169 sont séparés l'un de l'autre par un épaulement sortant 171 sensiblement perpendiculaire à l'axe X. Le second tronçon tronconique 169 est prolongé par un second tronçon cylindrique 173, les deux tronçons étant coaxiaux à l'axe X. Le second tronçon tronconique 167 est séparé du second tronçon cylindrique 173, par un second épaulement sortant 175, sensiblement perpendiculaire à l'axe X. Le fond borgne 89 ne comporte pas d'organes prévus pour percer ou ouvrir la zone de sortie de la capsule 163. En effet, cette capsule 163 n'a pas à être percée au niveau de la zone de sortie. Cette capsule 163 est de grande taille, et la cavité 59 occupe un volume beaucoup plus important que sur la figure 6.

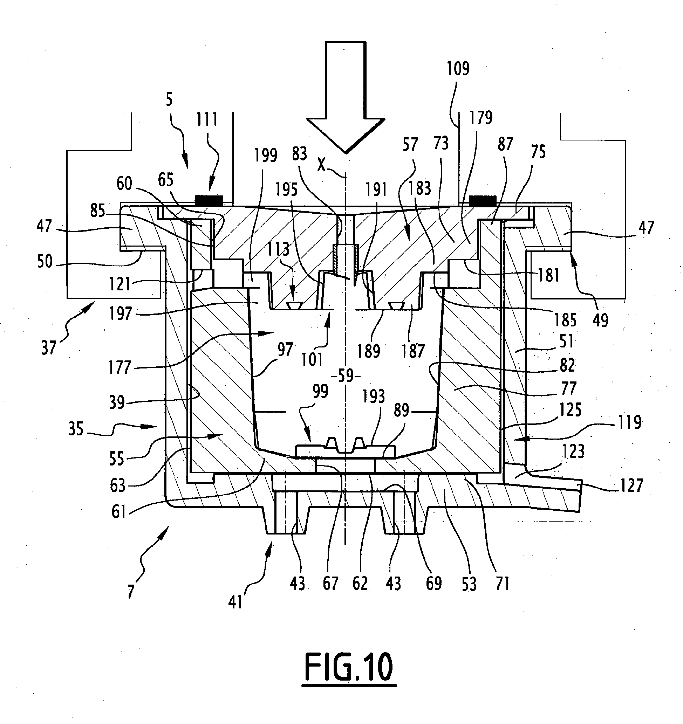

Encore un autre adaptateur est illustré sur la figure 10, cet adaptateur étant prévu pour recevoir encore un autre type de capsule 177. La capsule est par exemple du type vendu sous la marque Illy®. Seuls les points par lesquels la capsule 177 et l'adaptateur de la figure 10 diffèrent de la capsule et de l'adaptateur de la figure 6 seront détaillés ci-dessous. Les éléments identiques ou assurant la même fonction seront désignés par la même référence sur les figures 6 et 10.

La cavité de réception 59 présente un fond borgne 89 ayant la forme d'une cuvette de faible profondeur. Ce fond est prolongé par une paroi interne sensiblement tronconique, d'angle de conicité extrêmement faible, qui va en s'élargissant vers le couvercle.

Le tronc 73 du couvercle est étagé, et présente plusieurs marches. En partant de la collerette 75, le tronc 73 présente une première marche 179 délimitée vers le fond du réceptacle par une surface annulaire 181. La marche 179 est prolongée axialement par une seconde marche 183, de diamètre réduit par rapport à la marche 179. La marche 183 est délimitée vers le fond du réceptacle par une surface annulaire 185. La seconde marche 185 est prolongée axialement par une troisième marche 187, de diamètre réduit par rapport à la marche 183. La marche 187 est délimitée vers le fond du réceptacle par une surface circulaire 189. Un logement en creux 191 est ménagé au centre de la surface circulaire 189.

La capsule 177 présente une zone de sortie 193 ménagée dans le fond 99, et déportée vers l'intérieur de la capsule par rapport au fond borgne 89 de la cavité. La zone d'entrée est constituée d'un plot 195 en saillie au centre de la paroi frontale 101 de la capsule. Ce plot 195 délimite une ouverture communiquant avec le canal 83 percé dans le couvercle. Il est engagé dans le logement en creux 191.

La collerette 103 présente une section en L. La collerette présente un premier tronçon cylindrique 197, d'orientation axiale, se dressant sur la paroi 101 de la capsule. Le premier tronçon cylindrique 197 est prolongé radialement vers l'extérieur par un tronçon annulaire 199, sensiblement perpendiculaire à l'axe X. Quand la capsule 177 est engagée dans la cavité de réception 59, le tronçon annulaire 199 est pincée entre la surface annulaire 185 du couvercle et le fond 61 du réceptacle. Il est à noter qu'il subsiste un vide entre la surface 181 du couvercle et le fond 61 du réceptacle.

Le second dispositif d'étanchéité 113 est porté par la surface en disque 189 du couvercle. Il est interposé entre la paroi 101 de la capsule et la surface en disque 189. Il est à noter que l'adaptateur ne comporte pas de troisième dispositif d'étanchéité, entre le réceptacle et la capsule.

Ainsi, on a décrit ci-dessus plusieurs adaptateurs, chacun adapté pour recevoir un ou plusieurs types de capsules. Toutefois, il est possible de concevoir d'autres adaptateurs, en fonction de la géométrie des capsules à recevoir. En pratique, dès qu'une capsule de géométrie donnée est mise sur le marché, il est très simple de concevoir l'adaptateur correspondant permettant de charger la capsule dans la machine de l'ensemble de l'invention. La seule limite correspond à la taille de l'espace disponible dans l'enveloppe pour loger l'adaptateur.

## Revendications

1. Ensemble de préparation de boisson par extraction, susceptible de recevoir une pluralité de capsules de types différents les unes des autres, chaque capsule contenant un produit extractible, l'ensemble (1) comprenant :
- une machine (3) prévue pour la fourniture d'un fluide ;
- une pluralité d'adaptateurs (5) comprenant chacun un réceptacle (55) et un couvercle (57) définissant entre eux une cavité de réception (59), les cavités (59) des adaptateurs (5) étant différentes les unes des autres et chaque adaptateur (5) étant prévu pour la réception d'une desdites capsules dans la cavité (59) correspondante ;
- un ensemble de fixation (7) adapté pour monter chaque adaptateur (5) sur la machine (3) de manière réversible dans une position d'extraction dans laquelle la cavité (59) est susceptible d'être alimentée par le fluide,
l'ensemble de préparation de boisson comprenant un premier dispositif d'étanchéité (111) entre le couvercle (57) de chaque adaptateur (5) et la machine (3), chaque adaptateur (5) comprenant un second dispositif d'étanchéité (113) entre la capsule et le couvercle (57),
**caractérisé en ce que** l'ensemble de préparation de boisson comporte un circuit d'évacuation du fluide ayant traversé la capsule, et un circuit (119) de collecte de fuites de fluide à travers les premier et/ou second dispositifs d'étanchéité (111, 113) complètement séparé du circuit d'évacuation du fluide ayant traversé la capsule.

2. Ensemble selon la revendication 1, **caractérisé en ce que** l'ensemble de fixation (7) comprend une enveloppe (35) délimitant intérieurement un logement (39) adapté pour recevoir chacun desdits adaptateurs (5), et un dispositif de fixation (37) adapté pour monter de manière réversible l'enveloppe (35) sur la machine (3).

3. Ensemble selon la revendication 2, **caractérisé en ce que** les adaptateurs (5) présentent tous sensiblement la même forme externe, correspondant à la forme interne du logement (39).

4. Ensemble selon l'une quelconque des revendications précédentes, **caractérisé en ce que** chaque capsule présente une zone d'entrée de fluide, au moins certains adaptateurs (5) ayant un organe (91) de percement ou d'ouverture de la capsule dans ladite zone d'entrée porté par le réceptacle (55) et/ou le couvercle (57).

5. Ensemble selon l'une quelconque des revendications précédentes, **caractérisé en ce que** chaque capsule présente une zone de sortie de fluide, au moins certains adaptateurs (5) ayant un organe (93) de percement ou d'ouverture de la capsule dans ladite zone de sortie porté par le réceptacle (55) et/ou le couvercle (57).

6. Ensemble selon l'une quelconque des revendications précédentes, **caractérisé en ce que** la machine (3) comprend un conduit (25) d'amenée de fluide, chaque couvercle (57) ayant un canal (83) raccordant fluidiquement le conduit (25) à la cavité (59).

7. Ensemble selon l'une quelconque des revendications précédentes, **caractérisé en ce que** chaque réceptacle (55) a un orifice (67) prévu pour l'évacuation du fluide ayant traversé la capsule, chaque adaptateur (5) ayant un troisième dispositif d'étanchéité (115) entre la capsule et le réceptacle (55).

8. Ensemble selon l'une quelconque des revendications précédentes, **caractérisé en ce qu'**il comprend au moins quatre adaptateurs (5) prévus pour recevoir chacun une capsule de type déterminé, les quatre capsules étant de types différents les unes des autres.

9. Ensemble selon la revendication 8, **caractérisé en ce que** chacune des quatre capsules comprend un fond (99), une paroi frontale (101) et une paroi périphérique tubulaire (97) rigide raccordant le fond (99) à la paroi frontale (101), le fond (99), la paroi frontale (101) et la paroi périphérique (97) délimitant ensemble un volume interne de stockage du produit extractible.

10. Ensemble selon l'une quelconque des revendications précédentes, **caractérisé en ce que** la cavité (59) est ménagé essentiellement dans le couvercle (57), et est délimitée par des surfaces du couvercle (57) définissant une surface tronconique (82) et un fond borgne (89) fermant une extrémité de la cavité (59) opposée à l'adaptateur (55).

11. Ensemble selon la revendication 10, **caractérisé en ce que** la surface tronconique (82) converge vers le fond borgne (89).

## Patentansprüche

1. Einheit für die Zubereitung von Getränk durch Extraktion, die imstande ist, eine Vielzahl von Kapseln voneinander unterschiedlicher Typen aufzunehmen, wobei jede Kapsel ein extrahierbares Produkt enthält, wobei die Einheit (1) umfasst:
- eine Maschine (3), die für die Bereitstellung eines Fluids vorgesehen ist,
- eine Vielzahl von Adaptern (5), die jeweils eine Aufnahme (55) und einen Deckel (57) umfassen, die miteinander eine Aufnahmekavität (59) festsetzen, wobei die Kavitäten (59) der Adapter (5) voneinander unterschiedlich sind und jeder Adapter (5) für die Aufnahme einer der Kapseln in der entsprechenden Kavität (59) vorgesehen ist,
- eine Befestigungseinheit (7), die ausgebildet ist, um jeden Adapter (5) reversibel auf der Maschine (3) in einer Extraktionsposition zu montieren, in welcher die Kavität (59) imstande ist, von dem Fluid versorgt zu werden,
wobei die Einheit für die Zubereitung von Getränk eine erste Abdichtvorrichtung (111) zwischen dem Deckel (57) jedes Adapters (5) und der Maschine (3) umfasst, wobei jeder Adapter (5) eine zweite Abdichtvorrichtung (113) zwischen der Kapsel und dem Deckel (57) umfasst,
**dadurch gekennzeichnet, dass** die Einheit für die Zubereitung von Getränk einen Abfließkreis des Fluids aufweist, das die Kapsel durchquert hat, und einen Fluchtsammelkreis (119) durch die erste und/oder zweite Abdichtvorrichtung (111, 113) ausgetretenen Fluids, der vom Abfließkreis des Fluids, das die Kapsel durchquert hat, vollkommen separat ist.

2. Einheit nach Anspruch 1, **dadurch gekennzeichnet, dass** die Befestigungseinheit (7) eine Hülle (35) umfasst, der innen eine Aufnahme (39) begrenzt, die ausgebildet ist, um jeden der Adapter (5) aufzunehmen, und eine Befestigungsvorrichtung (37), die ausgebildet ist, um die Hülle (35) reversibel auf der Maschine (3) zu befestigen.

3. Einheit nach Anspruch 2, **dadurch gekennzeichnet, dass** die Adapter (5) alle etwa dieselbe äußere Form aufweisen, die der inneren Form der Aufnahme (39) entspricht.

4. Einheit nach einem der vorangehenden Ansprüche, **dadurch gekennzeichnet, dass** jede Kapsel eine Fluideinlaufzone aufweist, wobei mindestens einige Adapter (5) ein Durchstich- oder Öffnungsorgan (91) der Kapsel in der Einlaufzone haben, das die Aufnahme (55) und/oder der Deckel (57) trägt.

5. Einheit nach einem der vorangehenden Ansprüche, **dadurch gekennzeichnet, dass** jede Kapsel eine Fluidaulaßzone aufweist, wobei mindestens einige Adapter (5) ein Durchstich- oder Öffnungsorgan (93) der Kapsel in der Auslaßzone haben, das die Aufnahme (55) und/oder der Deckel (57) trägt.

6. Einheit nach einem der vorangehenden Ansprüche, **dadurch gekennzeichnet, dass** die Maschine (3) eine Fluidzulaufleitung (25) umfasst, wobei jeder Deckel (57) einen Kanal (83) hat, der die Leitung (25) mit der Kavität (59) fluidisch verbindet.

7. Einheit nach einem der vorangehenden Ansprüche, **dadurch gekennzeichnet, dass** jede Aufnahme (55) eine Öffnung (67) hat, die für die Ableitung des Fluids, das die Kapsel durchquert hat, vorgesehen ist, wobei jeder Adapter (5) eine dritte Abdichtvorrichtung (115) zwischen der Kapsel und der Aufnahme (55) hat.

8. Einheit nach einem der vorangehenden Ansprüche, **dadurch gekennzeichnet, dass** sie mindestens vier Adapter (5) umfasst, die vorgesehen sind, jeweils eine Kapsel eines bestimmten Typs aufzunehmen, wobei sich die vier Kapseln typmäßig voneinander unterscheiden.

9. Einheit nach Anspruch 8, **dadurch gekennzeichnet, dass** jede der vier Kapseln einen Boden (99), eine Frontwand (101) und eine starre rohrförmige Umfangswand (97) umfasst, die den Boden (99) mit der Frontwand (101) verbindet, wobei der Boden (99), die Frontwand (101) und die Umfangswand (97) gemeinsam ein inneres Speichervolumen des extrahierbaren Produkts begrenzen.

10. Einheit nach einem der vorangehenden Ansprüche, **dadurch gekennzeichnet, dass** die Kavität (59) im Wesentlichen in den Deckel (57) eingearbeitet ist und von den Flächen des Deckels (57) begrenzt ist, die eine kegelige Fläche (82) und einen Sackboden (89) festsetzen, der ein dem Adapter (55) gegenüberliegendes Ende der Kavität (59) verschließt.

11. Einheit nach Anspruch 10, **dadurch gekennzeichnet, dass** die kegelige Fläche (82) in Richtung auf des Sackbodens (89) hin verlauft.

## Claims

1. An assembly for preparing a beverage by extraction, able to receive a plurality of capsules of different types from one another, each capsule containing an extractable product, the assembly (1) comprising:
- a machine (3) provided to supply a fluid;
- a plurality of adapters (5) each comprising a recipient (55) and a cover (57) defining a reception cavity (59) between them, the cavities (59) of the adapters (5) being different from one another and each adapter (5) being provided to receive one of said capsules in the corresponding cavity (59);
- a fastener assembly (7) suitable for mounting each adapter (5) on the machine (3) reversibly in an extraction position in which the cavity (59) can be supplied by the fluid,
the beverage preparation assembly comprising a first sealing device (111) between the cover (57) of each adapter (5) and the machine (3), each adapter (5) comprising a second sealing device (113) between the capsule and the cover (57),
**characterized in that** the beverage preparation assembly includes a discharge circuit for the fluid having crossed through the capsule, and a circuit (119) for collecting fluid leaks through the first and/or second sealing devices (111, 113) completely separate from the discharge circuit for the fluid having crossed through the capsule.

2. The assembly according to claim 1, **characterized in that** the fastener assembly (7) comprises a casing (35) inwardly delimiting a housing (39) suitable for receiving each of said adapters (5), and a fastening device (37) suitable for reversibly mounting the casing (35) on the machine (3).

3. The assembly according to claim 2, **characterized in that** the adapters (5) all have substantially the same outer shape, corresponding to the outer shape of the housing (39).

4. The assembly according to any one of the preceding claims, **characterized in that** each capsule has a fluid inlet zone, at least some adapters (5) having a member (91) for piercing or opening the capsule in said inlet zone supported by the recipient (55) and/or the cover (57).

5. The assembly according to any one of the preceding claims, **characterized in that** each capsule has a fluid outlet zone, at least some adapters (5) having a member (93) for piercing or opening the capsule in said outlet zone supported by the recipient (55) and/or the cover (57).

6. The assembly according to any one of the preceding claims, **characterized in that** the machine (3) comprises a fluid supply line (25), each cover (57) having a channel (83) fluidly connecting the line (25) to the cavity (59).

7. The assembly according to any one of the preceding claims, **characterized in that** each recipient (55) has an orifice (67) provided to discharge fluid having crossed through the capsule, each adapter (5) having a third sealing device (115) between the capsule and the recipient (55).

8. The assembly according to any one of the preceding claims, **characterized in that** it comprises at least four adapters (5) provided each to receive a capsule of a determined type, the four capsules being of different types from one another.

9. The assembly according to claim 8, **characterized in that** each of the four capsules comprises a bottom (99), a front wall (101) and a rigid tubular peripheral wall (97) connecting the bottom (99) to the front wall (101), the bottom (99), the front wall (101) and the peripheral wall (97) together delimiting an inner volume for storage of the extractable product.

10. The assembly according to any one of the preceding claims, **characterized in that** the cavity (59) is arranged essentially in the cover (57), and is delimited by surfaces of the cover (57) defining a truncated cone surface (82) and a blind bottom (89) closing one end of the cavity (59) opposite to the adapter (55).

11. The assembly according to claim 10, **characterized in that** the truncated cone surface (82) converges toward the blind bottom (89).
